# EUROPEAN PATENT SPECIFICATION

(11) **EP 4 010 311 B1**
(45) Date of publication and mention of the grant of the patent: **03.09.2025**
(21) Application number: 20751148.6
(22) Date of filing: 06.08.2020
(51) Int. Cl.: C07C 263/20, C08G 18/76, C08G 18/12, C08G 18/32, C09J 175/08, C09D 175/08, C08G 18/80

(54) **POLYISOCYANATE AND PROCESS FOR PREPARING THE SAME**
POLYISOCYANAT UND VERFAHREN ZUR HERSTELLUNG DAVON
POLYISOCYANATE ET SON PROCÉDÉ DE PRÉPARATION

(30) Priority: 09.08.2019 CN 201910738766; 07.10.2019 EP 19201654
(43) Date of publication of application: 15.06.2022
(73) Proprietor: Covestro Deutschland AG, 51373 Leverkusen (DE)
(72) Inventor: LI, Hongchao, Shanghai 201204 (CN); ZHU, Zhe, Shanghai 200434 (CN); LIU, Jingmei, Shanghai 200127 (CN); DING, Pingbo, Wuhan 430024 (CN); WANG, Yuefeng, Shanghai 201108 (CN); WU, Ruiwen, 51375 Leverkusen (DE); MALEIKA, Robert, 40589 Düsseldorf (DE)
(74) Representative: Levpat
(86) International application number: PCT/EP2020/072090
(87) International publication number: WO 2021/028300

(56) References cited:
- US-A- 5 747 628
- US-A1- 2016 017 097

## Description

### Technical Field

The present invention relates to a urethane group-containing polyisocyanate prepared by reacting a system containing organic polyhydroxy compounds and excess toluene diisocyanate, a process for preparing the same, a product containing the same, and use thereof as a polyisocyanate component in a polyurethane paint.

### Background Technique

A polyisocyanate having a urethane group derived from organic polyhydroxy compounds, in particular, lower-molecular weight organic polyhydroxy compounds and toluene diisocyanate (TDI) has been well known for a long time, for example, polyisocyanates described in DE 870 400, DE953 012 and DE 1 090 196. This kind of polyisocyanate is very important in the field of polyurethane paints (also known as polyurethane coatings) and polyurethane adhesives, in particular, wood coatings as well as adhesives. DE-PS 1090 186 and US-PS 3,183,112 describe the preparation of the commercially available polyisocyanate products, e.g., Desmodur L75 EA, by reacting polyhydroxy compounds with a 5 to 10 times molar amount of toluene diisocyanate, followed by removing the excess starting diisocyanate by separation in a thin film evaporator, and then the addition of the corresponding solvent. CN1793194A also discloses a separation technology for free isocyanate monomer in a polyurethane curing agent.

In the actual use of the above polyisocyanates, some products sometimes exhibit agglomeration or even solid precipitation in the product solution after being used or stored for a period of time, especially at lower storage temperature. Although after being heated and stirred for a period of time, the above products containing agglomeration or even solid precipitation will change into a clear solution again without affecting the quality and performance of the product, however, the additional heating treatment operation affects the ease of use of the product, thus avoiding the agglomeration or even solid precipitation of the product during storage is a challenge for polyisocyanate producers.

CN109824865A discloses a process for preparing a storage stable polyurethane curing agent. The high molecular weight polymer components are considered to cause the deterioration of storage stability. Therefore, after the excess toluene diisocyanate reacts with hydroxy compounds, organic acids having a pKa value of 1 to 15 are added to the reaction mixture, and then the excess toluene diisocyanate monomer is separated at a high temperature by a thin-film evaporator. The added organic acids are believed to promote the reaction of free hydroxyl groups with highly reactive isocyanate groups in the reaction mixture during the thin film evaporation, to reduce the residual hydroxyl content of the prepared curing agent, and to increase the storage stability of the curing agent. However, the addition of organic acids such as dibutyl phosphate not only increases the process complexity and the raw material cost, but also limits the application of the curing agents. For example, such curing agent might not be proper for food contact.

CN1793194A improves the storage stability of a curing agent by additionally adding a high molecular weight polyethylene glycol 200 to low molecular weight organic polyhydroxy compounds. It is generally understood in the industry that high molecular weight polyethylene glycol 200 reacts with toluene diisocyanate to form a component having a higher molecular weight, and may cause increase of viscosity and decrease of the isocyanate group content, which are disadvantages for industrial applications. Moreover, the increase of the types of raw material components will increase the process complexity and the raw material cost.

Therefore, the development of polyisocyanates with low viscosity and good storage stability without increasing the raw material components and the process complexity is still urgently needed in the polyurethane industry.

### Summary of the Invention

The term "curing" refers to a process of changing from a liquid state to a solid state of the paint or adhesive.

The term "adhesive" refers to a mixture comprising a curable and viscous chemical component and is also used as a synonym for binder and/or sealant and/or glue.

The term "polyurethane" means polyurethane urea and/or polyurethane polyurea and/or polyurea and/or polythiourethane.

The term "toluene diisocyanate" refers to a collective name for 2,4-toluene diisocyanate, 2,6-toluene diisocyanate and a mixture of 2,4-toluene diisocyanate and 2,6-toluene diisocyanate.

The polyisocyanate of the present invention is actually in the form of a solution, wherein the solvent can be those known in the art.

It is an object of the present invention to provide a urethane group-containing polyisocyanate prepared by reacting a system containing organic polyhydroxy compounds and excess toluene diisocyanate, a process for preparing the same, a product containing the same, and use thereof as a polyisocyanate component in a polyurethane paint.

According the present invention, the urethane group-containing polyisocyanate prepared by reacting a system containing organic polyhydroxy compounds and excess toluene diisocyanate, wherein the organic polyhydroxy compounds contain trimethylolpropane and optionally di- to tetra-hydric alcohols having a molecular weight of 62-146 g/mol, characterized in that:
a. the ratio of the integral area of the component peaks having a weight-average molecular weight of 800±50 g/mol to the integral area of the shoulder peaks having a weight-average molecular weight of 950±50 g/mol is 2-14; and
b. the viscosity is not higher than 2500mPa·s.

According to one aspect of the invention, a process for preparing a polyisocyanate is provided, comprising:
i. reacting a system containing organic polyhydroxy compounds and excess toluene diisocyanate to produce a pre-polymer reaction mixture, the reaction temperature is 85°C-120°C, the reaction time is 1 hour to 24 hours;
ii. removing the unreacted toluene diisocyanate by separation from the pre-polymer reaction mixture obtained in step i; and
iii. adding organic solvents to dilute and to produce the polyisocyanates.

According to one aspect of the invention, a product comprising the polyisocyanate is provided.

According to one aspect of the invention, the use of the polyisocyanate as a polyisocyanate component in a polyurethane paint is provided.

According to one aspect of the invention, the use of the polyisocyanate as a polyisocyanate component in a polyurethane adhesive is provided.

The urethane group-containing polyisocyanate of the present invention, prepared by reacting a system containing organic polyhydroxy compounds and excess toluene diisocyanate, not only has high content of isocyanate groups, low content of monomer toluene diisocyanate and low viscosity, but also has the advantage of being not prone to agglomerate, that is, a good storage stability, for a long period of storage time.

The paint films formed by the polyurethane paint containing the polyisocyanate of the present invention and in particular formed by the two-component polyurethane paint containing the polyisocyanate of the present invention as a crosslinking agent have high abrasion resistance and excellent adhesion property on a variety of different substrates. The paint films are hard but still elastic, and the paint films are not easily discolored. The texture of the light-colored woods painted therewith can also be obviously effective.

### Description of the drawings

The invention will be illustrated and explained in more detail below with reference to the drawings, in which:

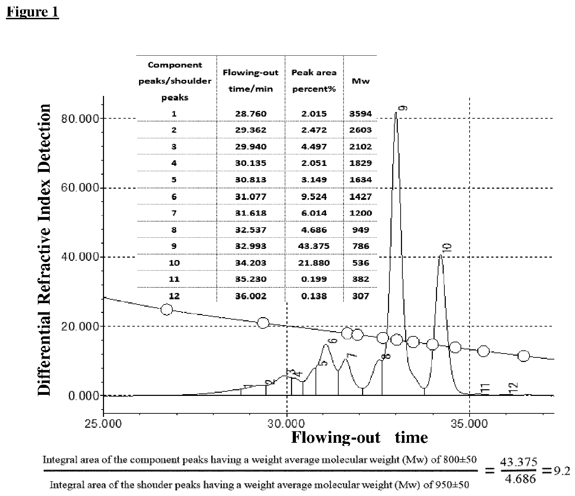

Figure 1 is a Gel Permeation Chromatography (GPC) obtained from polyisocyanate 5 of Example 5. Figure 1 also shows the calculation of the ratio of the integral area of the component peaks having a weight-average molecular weight of 800±50 g/mol to the integral area of the shoulder peaks having a weight-average molecular weight of 950±50 g/mol of polyisocyanate 5.

### Detailed description of the present invention

The present invention provides a urethane group-containing polyisocyanate prepared by reacting a system of organic polyhydroxy compounds and excess toluene diisocyanate, wherein the organic polyhydroxy compounds contain trimethylolpropane and optionally di- to tetra-hydric alcohols having a molecular weight of 62-146 g/mol, the polyisocyanate has the following characteristics: a. the ratio of the integral area of the component peaks having a weight-average molecular weight of 800±50 g/mol to the integral area of the shoulder peaks having a weight-average molecular weight of 950±50 g/mol is 2-14; and b. the viscosity is not higher than 2500mPa·s. The present invention also provides a process for preparing the polyisocyanate, a product containing the same, and use thereof as a polyisocyanate component in a polyurethane paint and adhesive.

### Polyisocyanate

The ratio of the integral area of the component peaks having a weight-average molecular weight of 800±50 g/mol to the integral area of the shoulder peaks having a weight-average molecular weight of 950±50 g/mol is preferably 3-13, further preferably 4-12, most preferably 6-12.

The polyisocyanate component of the present invention and the weight-average molecular weight thereof are determined according to DIN 55672-1:2016-03 with a HLC-8320 EcoSEC-type gel chromatograph from TOSOH, using polystyrene standard and high performance universal chromatographic column, a group of 4 columns (TSKgel G2000HXL, TSKgel G2500HXL, TSKgel G3000HXL and TSKgel G4000HXL, the chromatographic column packing material is a styrene-divinylbenzene copolymer) and a differential refraction detector, using THF as eluent, a flow rate of 1.0 ml/min, a pressure of 6.4 MPa and a column temperature of 40°C.

The viscosity of the polyisocyanate is preferably not higher than 2000 mPa•s, most preferably not higher than 1800 mPa•s. The viscosity is measured according to DIN EN ISO 5:1994-10 using a cone/plate measuring instrument at 23°C.

Preferably the viscosity of the polyisocyanate is 2000 mPa·s or less, and the ratio of the integral area of the component peaks having a weight-average molecular weight of 800±50 g/mol to the integral area of the shoulder peaks having a weight-average molecular weight of 950±50 g/mol is 4-12.

Most preferably the viscosity of the polyisocyanate is 1800 mPa·s or less, and the ratio of the integral area of the component peaks having a weight-average molecular weight of 800±50 g/mol to the integral area of the shoulder peaks having a weight-average molecular weight of 950±50 g/mol is 6-12.

The polyisocyanate preferably further has one or more of the following characteristics:
c. the solid content is not lower than 50wt% and not higher than 90wt%;
d. the amount of the unreacted excess toluene diisocyanate is not higher than 0.5wt%; and
e. the isocyanate group content is 13wt%-15wt%;
all of the above weight percent numbers are based on the total weight of the polyisocyanate being 100wt%.

The solid content of the polyisocyanate is preferably 60wt%-80wt%, further preferably 70wt%-77wt%, most preferably 73wt%-77wt%, based on the total weight of the polyisocyanate being 100wt%.

The solid content (also referred to as the non-volatile content) is determined according to DIN EN ISO 3251 using the drying temperature of 120°C, the drying time of 2 hours, the test vessel diameter of 75 mm and the sample weight of 2.00+/- 0.02g.

The amount of the unreacted excess toluene diisocyanate of the polyisocyanate is preferably not higher than 0.4wt%, based on the total weight of the polyisocyanate being 100wt%.

The content of the unreacted excess toluene diisocyanate is determined by gas chromatography according to DIN EN ISO 10283:2007-11 using an internal standard.

The polyisocyanate of the present invention contains a low level of the unreacted excess toluene diisocyanate, which improves occupational hygiene, particularly occupational hygiene in manual operation, and extends the application field of the polyisocyanate of the present invention.

The analysis results from the GPC indicate that multiple polyisocyanate components are simultaneously present in the polyisocyanate of the present invention, and the specific components depend on the used organic polyhydroxy compounds and the toluene diisocyanate (TDI) content.

Among others, the main component is formed by reacting a single organic polyhydroxy compound in the system with a TDI molecule corresponding to its functionality number; in addition to the main component, higher molecular weight components formed by continuing to react two or more organic polyhydroxy compounds in the system with TDI and the main component are included. We have surprisingly found that a shoulder peak sometimes appears on the high molecular weight side of the GPC peak of a component formed by reacting a single organic polyhydroxy compound with a TDI molecule corresponding to its functionality number, and it is surprisingly found that the shoulder peak also contributes to increase the isocyanate group content of the polyisocyanate and to improve the storage stability of the polyisocyanate without significantly increasing the viscosity of the polyisocyanate. In particular, for the polyisocyanate formed by the reaction of trimethylolpropane and TDI, the ratio of the integral area of the component peaks having a weight-average molecular weight (Mw) of 800±50 g/mol to the integral area of the shoulder peaks having a weight-average molecular weight of 950±50 g/mol in the GPC will affect the storage stability of the polyisocyanate product.

### Toluene diisocyanate

The toluene diisocyanate is preferably a mixture of 2,4-toluene diisocyanate and 2,6-toluene diisocyanate, wherein the weight ratio of 2,4-toluene diisocyanate to 2,6-toluene diisocyanate is 60:40-95:5, preferably 65:35-90:10, most preferably 70:30-85:15.

The toluene diisocyanate is preferably prepared by the gas phase phosgenation.

2-chloro-6-isocynato-methyl cyclohexadiene (CIMCH) can be in the form of three double bond isomers which can be present in the TDI in different ratios. These are formed, for example, in TDI production from I-amino-2- methyl-cyclohexenone contained in the TDA used, which in turn can form in the production of TDA from dinitrotoluene (DNT) by partial nuclear hydrogenation of TDA and replacement of an amino functional group by water. It is also possible that the keto functional group is already introduced proportionately by oxidative attack in the production of DNT by nitration of toluene, there first being formed nitrocresols which can then form the above-described I-amino-methyl-2- cyclohexenone in the subsequent hydrogenation.

The toluene diisocyanate have a content of 2-chloro-6-isocyanato-methylcyclohexadienes (CIMCH) of < 5 wt. ppm, preferably of < 3 wt. ppm. Such TDI grades can be obtained, for example, by purposive removal of 2-chloro-6-isocyanato-methylcyclohexadienes from the preconcentrated crude TDI solutions by distillation by means of a dividing wall distillation column, as is described in EP I 413 571 B1. Particular preference is given, however, to toluene diisocyanates which are produced by gas phase phosgenation of TDA and whose content of 2-chloro-6-isocyanato-methylcyclohexadienes is below 1ppm the detection limit. Toluene diisocyanate of such a grade is obtainable, for example, from the Caojing production site of Covestro Deutschland AG, China.

Two independent analytical methods have been used for the clear characterization of the component 2-chloro- 6-isocyanato-methylcyclohexadienes. By means of gas chromatography techniques, different toluene diisocyanate grades having a 2,4 content of about 80 wt. %were tested for their dissimilarities in the secondary component spectrum. By subsequent coupled gas chromatography-mass spectroscopy, a molecular weight of 169 g/mol was allocated to the three hitherto unknown compounds (CIMCH including two isomers). It was possible to obtain further structural information from the fragmentation in a manner known to the person skilled in the art. By means of complex nuclear resonance spectroscopy experiments ('H-NMR, 'H-COSY, 'H-, 'HTOCSY and 'H-, ' C-HMBC), the structures indicated below could be allocated to the three components with *m*/*z* 169.

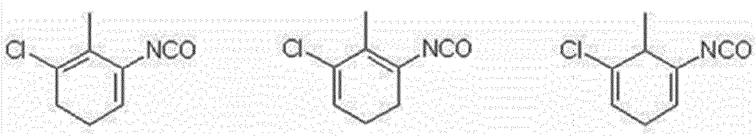

By purposive method development it was possible to set the detection limit of the isomers of CIMCH by means of gas chromatography-spectroscopy, using an Optima 5 HT column (60 m length, 0.25 mm inside diameter, 0.25 µm film thickness) from Macherey-Nagel in an HP Series 6890 gas chromatograph from Hewlett Packard, at 1 wt. ppm.

### An isocyanate compound different from the toluene diisocyanate

The system may further comprises an isocyanate compound different from the toluene diisocyanate, the weight ratio of the toluene diisocyanate to the isocyanate compound different from the toluene diisocyanate is preferably not lower than 60:40, further preferably not lower than 90:10, most preferably not lower than 95:5.

The isocyanate compound different from the toluene diisocyanate in the system may be any other compounds having an isocyanate group, such as a monoisocyanate having an aliphatic, alicyclic, araliphatic or aromatic bonded isocyanate group, a diisocyanate having an aliphatic, alicyclic, araliphatic and/or aromatic bonded isocyanate group, a triisocyanate and/or a higher functionality isocyanate, and a modified isocyanate derived from the above-mentioned diisocyanate and triisocyanate and prepared by oligomerization e.g. trimerization.

The monoisocyanate having an aliphatic, alicyclic, araliphatic or aromatic bonded isocyanate group is preferably one or more of the following: stearyl isocyanate and naphthyl isocyanate.

The diisocyanate having an aliphatic, alicyclic, araliphatic and/or aromatic-bonded isocyanate group is preferably one or more of the following: 1,4-diisocyanatobutane, 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- or 2,4,4-trimethyl-1,6-diisocyanatohexane, 1,10-diisocyanatodecane, 1,3- and 1,4-diisocyanatocyclohexane, 1,3- and 1,4-di(isocynatomethyl)cyclohexane, 1-isocynato-3,3,5-trimethyl-5-isocynatomethylcyclohexane (isophorone diisocyanate, IPDI), 4,4'-diisocyanatodicyclohexylmethane, 1-isocynato-1-methyl-4(3)-isocynatomethyl cyclohexane (IMCI), di(isocynatomethyl)norbornane, 2,4'- and 4,4'-diisocyanatodiphenylmethane and higher homologs, 1,5-diisocyanato naphthalene and dipropylene glycol diisocyanate.

The triisocyanate and/or the higher functionality isocyanate is preferably one or more of the following: 4-isocyanatomethyloctane-1,8-diisocyanate (nonane triisocyanate) and undecane-1,6,11-triisocyanate.

The isocyanate compound different from the toluene diisocyanate in the system is most preferably one or more of the following: 1,5-diisocyanatopentane (PDI ), 1,6-diisocyanatohexane (HDI) and a modified isocyanate derived from the above-mentioned diisocyanate and prepared by oligomerization e.g. trimerization.

When the system comprises both toluene diisocyanate and the isocyanate compound different from the toluene diisocyanate, the total amount of any unreacted monomeric isocyanates still present (i.e., the sum of the amount of unreacted excess toluene diisocyanate and the amount of unreacted excess isocyanate compound different from the toluene diisocyanate) is preferably not higher than 0.5wt%, further preferably not higher than 0.4wt%, based on the total weight of the polyisocyanate being 100wt%.

The content of the unreacted excess monomeric toluene diisocyanate and the content of the unreacted excess isocyanate compound different from the toluene diisocyanate are determined by gas chromatography according to DIN EN ISO 10283:2007-11 using an internal standard.

### Organic polyhydroxy compound

The total weight of the trimethylolpropane and the optional di- to tetra-hydric alcohols having a molecular weight of 62-146 g/mol is preferably 99.7wt%-100wt%, most preferably 100wt%,based on the total weight of the organic polyhydroxy compounds being 100wt%.

The weight ratio of the trimethylolpropane to the di- to tetra-hydric alcohols having a molecular weight of 62-146 g/mol is preferably 1:4-4:1, further preferably 3:7-3: 1, most preferably 1:1-7:3.

The di- to tetra-hydric alcohol having a molecular weight of 62-146 g/mol is preferably one or more of the following: ethylene glycol, diethylene glycol, 1,2-propylene glycol, 1,3-propylene glycol, 1,2-buylene glycol, 1,3-buylene glycol, 1,4-buylene glycol, 1,5-pentylene glycol, neopentylene glycol, 1,6-hexylene glycol, 2-ethyl hexylene glycol, glycerol and pentaerythritol, most preferably diethylene glycol.

The di- to tetra-hydric alcohol having a molecular weight of 62-146 g/mol is most preferably diethylene glycol, the weight ratio of trimethylolpropane to diethylene glycol is preferably 1:4-4:1, further preferably 3:7-3: 1, most preferably 1:1-7:3.

### Process

A process for preparing the polyisocyanate of the present invention comprises:
i. reacting a system containing organic polyhydroxy compounds and excess toluene diisocyanate to produce a pre-polymer reaction mixture, the reaction temperature is 85°C-120°C, the reaction time is 1 hour to 24 hours;
ii. removing the unreacted toluene diisocyanate by separation from the pre-polymer reaction mixture obtained in step i; and
iii. adding organic solvents to dilute and to produce the polyisocyanates;
wherein, the organic polyhydroxy compound contains trimethylolpropane and an optional di- to tetra-hydric alcohols having a molecular weight of 62-146 g/mol; the polyisocyanate has the following characteristics:
a. the ratio of the integral area of the component peaks having a weight-average molecular weight of 800±50 g/mol to the integral area of the shoulder peaks having a weight-average molecular weight of 950±50 g/mol is 2-14; and
b. the viscosity is not higher than 2500mPa·s.

In step i, the reaction temperature is preferably 85°C-110°C, most preferably 90°C-98°C.

In step i, the reaction time is preferably 1.2 hours to 7 hours, most preferably 1.2 hours to 4 hours. The reaction time in step i of the present invention includes the time for mixing the organic polyhydroxy compounds with toluene diisocyanate and the time for reacting of the system at the reaction temperature.

The equivalent ratio of the isocyanate group to the hydroxy group of the system is preferably 3:1-20:1, further preferably 3.5:1-10:1, most preferably 3.8:1-8:1.

The separation of step ii is preferably distillation.

Preferably, specifically in step ii, the pre-polymer reaction mixture is distilled through a thin film evaporator at 100°C-180°C at vacuum, preferably 120°C-170°C to remove unreacted excess toluene diisocyanate to obtain a semi-hard to hard product crude.

Specifically in step iii, organic solvents is added to the semi-hard to hard product crude obtained in step ii to dilute and to produce the polyisocyanate.

The organic solvent may be those known in the industry, such as toluene, xylene, cyclohexane, butyl acetate, ethyl acetate, ethylene glycol acetate (ethyl glycol acetate), pentyl acetate, hexyl acetate, methoxypropyl acetate, tetrahydrofuran, dioxane, acetone, N-methylpyrrolidone, methyl ethyl ketone, solvent naphtha, higher substituted aromatic compounds (such as those commercially available under the trade marks Solvent Naphtha^{®}, Solvesso^{®}, Shellsol^{®}, Isopar^{®}, Nappar^{®} and Diasol^{®}), benzene homologues, tetralin, decalin and alkanes with more than 6 carbon atoms, conventional plasticizers such as phthalates, sulfonates and phosphates and mixtures of such diluents and solvents. Further suitable solvents are aliphatic diisocyanate-based polyisocyanates as described, for example, in DE-A 4 428 107, which render the polyisocyanate free of volatile solvents and diluents or to contain less volatile solvents and diluents.

The organic solvent is preferably added in such an amount as to be able to set the solid content of the polyisocyanate to be 50wt%-90wt%, more preferably 60wt%-80wt%, further preferably 70wt%-77wt%, most preferably 73wt%-77wt%.

The method can be carried out batchwise or continuously.

### Product

The product is preferably selected from a group consisting of polyurethane paints and polyurethane adhesives.

The polyurethane paint may be a one-component polyurethane paint or a two-component polyurethane paint.

The two-component polyurethane paint may comprise the polyisocyanate of the invention, and one or more of the following known in the polyurethane paint technology: polyesters polyols, polyethers polyols, polyacrylates polyols, and optional low molecular weight polyols.

The two-component polyurethane paint may also comprise the polyisocyanate of the invention and one or more of the following: a blocked polyketimine and a polyamine of an oxazolidine, wherein the equivalent ratio of the isocyanate group to the isocyanate-reactive group is 0.8:1-3.0:1, preferably 0.9:1-1.1:1.

The two-component polyurethane paint may further comprise a catalyst. The catalyst is used to accelerate the curing of the polyurethane paint.

The catalyst may be those known in the art, such as an amine such as triethylamine, pyridine, picoline, benzyldimethylamine, N,N'-dimethylpiperazine or a metal salt such as ferric chloride (III), zinc chloride, zinc 2-ethylhexanoate, stannum (II) 2-ethylhexanoate, dibutyl stannum (IV) dilaurate or molybdenum glycolate.

The one-component polyurethane paint or two-component polyurethane paint comprising the polyisocyanate of the present invention is capable of forming a hard and still elastic paint film with excellent adhesion property on a variety of different substrates. The paint film also has the advantages of high abrasion resistance and being not easily discolored, and is suitable for the field of wooden ware, particularly suitable for the field of wooden ware using light-colored wood.

### Example

As used herein, "and/or" refers to one or all of the elements mentioned.

As used herein, "not lower than" and "not higher than" encompass the recited values themselves, unless otherwise indicated.

The analytical measurements of the present invention are carried out at 23°C unless otherwise stated.

The polyisocyanate component of the present invention and the weight-average molecular weight thereof are determined according to DIN 55672-1:2016-03 with a HLC-8320 EcoSEC-type gel chromatograph from TOSOH, using polystyrene standard and high performance universal chromatographic column, a group of 4 columns (TSKgel G2000HXL, TSKgel G2500HXL, TSKgel G3000HXL and TSKgel G4000HXL, the chromatographic column packing material is a styrene-divinylbenzene copolymer) and a differential refraction detector, using THF as eluent, a flow rate of 1.0 ml/min, a pressure of 6.4 MPa and a column temperature of 40°C.

The isocyanate group (NCO) content is determined by titration according to DIN-EN ISO 11909: 2007-05 and the measured data include free and potentially free NCO content.

The storage stability test of polyisocyanate: The polyisocyanate sample is sealed and stored in a freezer at -5°C for 10 weeks, and the sample is irradiated with a cold light source to see if the sample is clear or turbid. If the sample is clear, the storage stability is considered to be good, and if the sample is turbid, the storage stability is considered to be poor.

### Raw materials and reagents

DESMODUR^{®} T 80: toluene diisocyanate, containing about 80wt% of 2,4-toluene diisocyanate and 20wt% of 2,6-toluene diisocyanate, commercially available from Covestro Polymer Co., Ltd.

Trimethylolpropane: commercially available from Nantong Baichuan New Materials Co., Ltd.

Diethylene glycol: commercially available from Yangzi Petrochemical - BASF Co., Ltd.

Ethyl acetate: commercially available from Sigma Aldrich (Shanghai) Trading Co., Ltd.

2-Ethyl hexanol: commercially available from Sigma Aldrich (Shanghai) Trading Co., Ltd.

Borchi ^{®} Kat 22: Catalyst, commercially available from OMG Borchers GmbH.

NACURE^{®} 5076: Terminator commercially available from King Industries.

### Examples and Comparative Examples

### Example 1

800 g DESMODUR^{®} T 80 was previously added into a 1000 mL reaction flask. The flask was heated in an oil bath to 98°C. Within 60 minutes, a premixed polyol mixture consisting of 52g trimethylolpropane and 28g diethylene glycol was continuously dosed into the flask to carry out the reaction. The reaction was carried out by stirring at 98°C for 3 hours to produce a reaction mixture, the excess monomer toluene diisocyanate was removed from the reaction mixture by means of a two-stage thin film distillation (170°C /165°C, p ≤ 0.5 mbar), and then ethyl acetate was added to produce an urethane group-containing polyisocyanate 1.

### Example 2

800 g DESMODUR^{®} T 80 was previously added into a 1000 mL reaction flask. The flask was heated in an oil bath to 95°C. Within 60 minutes, a premixed polyol mixture consisting of 52g trimethylolpropane and 28g diethylene glycol was continuously dosed into the flask to carry out the reaction. The reaction was carried out by stirring at 95°C for 2 hours to produce a reaction mixture, the excess monomer toluene diisocyanate was removed from the reaction mixture by means of a two-stage thin film distillation (170°C /165°C, p ≤ 0.5 mbar), and then ethyl acetate was added to produce an urethane group-containing polyisocyanate 2.

### Example 3

1800 g DESMODUR^{®} T 80 was previously added into a 2000 mL double-jacket glass reaction vessel. The vessel was heated to 85°C. Within 250 minutes, a premixed polyol mixture consisting of 166g trimethylolpropane and 89g diethylene glycol was continuously dosed into the vessel to carry out the reaction. During the reaction, the reaction heat was removed from the vessel safely by a thermal circulator with heating and cooling functions. The reaction was carried out in an isothermal manner. The reaction was carried out by stirring at 85°C for 2 hours to produce a reaction mixture. Then, the excess monomer toluene diisocyanate was removed from the reaction mixture by means of a two-stage thin film distillation (170°C /165°C, p ≤ 0.5 mbar), and then ethyl acetate was added to produce an urethane group-containing polyisocyanate 3.

### Example 4

A continuous reaction system consisted of four cascade jacket reactors, each reactor having a volume of 400L. The four cascade reactors were initially changed with DESMODUR^{®} T 80, and the reaction temperatures of four reactors were respectively set at 90°C, 95°C, 95°C and 95°C. At each of the reactors, the reaction heat released from the reaction was safely removed by means of a cooling and heating temperature control system. The reaction was carried out in an isothermal manner. At the start of the reaction, DESMODUR^{®} T 80 (room temperature) and organic polyhydroxy compounds (60°C) in a weight ratio of 8.5:1 were continuously dosed into the first reactor of the cascade and the temperature inside the reactor was maintained at 90°C via the jacket. The organic polyhydroxy compound was a mixture of trimethylolpropane and diethylene glycol in a weight ratio of 65:35. The overall feeding flow rate was controlled in order to maintain the average residence time in in the four cascade reactors of about 1.5 hours. The excess monomer toluene diisocyanate was removed from the reaction mixture by means of a two-stage thin film distillation (170°C /160°C, p ≤ 0.5 mbar), and then ethyl acetate was added to produce an urethane group-containing polyisocyanate 4.

### Example 5

A continuous reaction system consisted of four cascade jacket reactors, each reactor having a volume of 400L. The four cascade reactors were initially charged with DESMODUR^{®} T 80, and the reaction temperatures of four reactors were respectively set at 90°C, 95°C, 95°C and 95°C. At each of the reactors, the reaction heat released from the reaction was safely removed by means of a cooling and heating temperature control system. The reaction was carried out in an isothermal manner. At the start of the reaction, DESMODUR^{®} T 80 (room temperature) and organic polyhydroxy compounds (60°C) in a weight ratio of 8.7:1 were continuously dosed into the first reactor of the cascade and the temperature inside the reactor was maintained at 90°C via the jacket. The organic polyhydroxy compound was a mixture of trimethylolpropane and diethylene glycol in a weight ratio of 65:35. The overall feeding flow rate was controlled in order to maintain the average residence time in the four cascade reactors of about 1.2 hours. The excess monomer toluene diisocyanate was removed from the reaction mixture by means of a two-stage hin film distillation (170°C /160°C, p ≤ 0.5 mbar), and then ethyl acetate was added to produce an urethane group-containing polyisocyanate 5.

### Example 6

A continuous reaction system consisted of four cascade jacket reactors, each reactor having a volume of 400L. The four cascade reactors were initially charged with DESMODUR^{®} T 80, and the reaction temperatures of four reactors were respectively set at 85°C, 90°C, 90°C and 90°C. At each of the reactors, the reaction heat released from the reaction was safely removed by means of a cooling and heating temperature control system. The reaction was carried out in an isothermal manner. At the start of the reaction, DESMODUR^{®} T 80 (room temperature) and organic polyhydroxy compounds (60°C) in a weight ratio of 8.7:1 were continuously dosed into the first reactor of the cascade and the temperature inside the reactor was maintained at 85°C via the jacket. The organic polyhydroxy compound was a mixture of trimethylolpropane and diethylene glycol in a weight ratio of 65:35. The overall feeding flow rate was controlled in order to maintain the average residence time in the four cascade reactors of about 1.5 hours. The excess monomer toluene diisocyanate was removed from the reaction solution by means of a two-stage thin film distillation (170°C /160°C, p ≤ 0.5 mbar), and then ethyl acetate was added to produce an urethane group-containing polyisocyanate 6.

### Example 7

1700 g DESMODUR^{®} T 80 was previously added into a 2000 mL double-jacketglass reaction vessel. The vessel was heated to 85°C. Within 45 minutes, a premixed polyol mixture consisting of 110g trimethylolpropane and 60g diethylene glycol was continuously dosed into the vessel to carry out the reaction. During the reaction, the reaction heat was removed from the vessel safely by a thermal circulator with heating and cooling functions. The reaction was carried out in an isothermal manner. The reaction was carried out by stirring at 85°C for 2 hours to produce a reaction mixture. Then, the excess monomer toluene diisocyanate was removed from the reaction mixture by means of a two-stage thin film distillation (135°C /130°C, p ≤ 0.05 mbar), and then ethyl acetate was added to produce an urethane group-containing polyisocyanate 7.

### Comparative Example 1

1700 g DESMODUR^{®} T 80 was previously added into a 2000 mL double-jacket glass reaction vessel. The vessel was heated to 80°C. Within 45 minutes, a premixed polyol mixture consisting of 110g trimethylolpropane and 60g diethylene glycol was continuously dosed into the vessel to carry out the reaction. During the reaction, the reaction heat was removed from the vessel safely by a thermal circulator with heating and cooling functions. The reaction was carried out in an isothermal manner. The reaction was carried out by stirring at 80°C for 1 hour to produce a reaction mixture. Then, the excess monomer toluene diisocyanate was removed from the reaction mixture by means of a two-stage thin film distillation (135°C /130°C; p ≤ 0.05 mbar), and then ethyl acetate was added to produce an urethane group-containing Comparative polyisocyanate 1.

### Comparative Example 2

1411 g DESMODUR^{®} T 80 was previously added into a 2000 mL double-jacket glass reaction vessel. The vessel was heated to 85°C. Within 60 minutes, a premixed polyol mixture consisting of 91g trimethylolpropane and 49g diethylene glycol was continuously dosed into the vessel to carry out the reaction. During the reaction, the reaction heat was removed from the vessel safely by a thermal circulator with heating and cooling functions. The reaction was carried out in an isothermal manner. The reaction was carried out by stirring at 85°C for 1 hour to produce a reaction mixture. The obtained reaction mixture was heated to about 98°C. 0.26g Borchi^{®} Kat 22 solution (10wt% in 2-ethyl hexanol) was added, and the reaction was carried out by stirring at 98°C for 1 hour. 0.17g NACURE^{®} 5076 was added, and stirred for 1 hour. Then, the excess monomer toluene diisocyanate was removed by means of a two-stage thin film distillation (127°C /140°C; p ≤ 0.05 mbar), and then ethyl acetate was added to produce an urethane group-containing Comparative polyisocyanate 2.

### Polyisocyanate specifications and storage stability test results

Table 1 lists the specifications and storage stability test results for polyisocyanates 1-7 and comparative polyisocyanates 1-2.

**Table 1: Specifications and Storage Stability Test of Polyisocyanates**

| Example /Comparative Example | Polyisocyanate specifications | | | | | Storage stability test |
|---|---|---|---|---|---|---|
| | Isocyanate group content /wt% | Solid content /wt% | Unreacted excess TDI monomer content /wt% | Viscosity /mPa·s | Ratio of integrated areas | |
| polyisocyanate 1 | 14.3 | 74.6 | 0.32 | 2340 | 2.6 | Clear |
| polyisocyanate 2 | 13.4 | 74.5 | 0.20 | 1850 | 4.6 | Clear |
| polyisocyanate 3 | 13.2 | 75.2 | 0.35 | 1649 | 6.7 | Clear |
| polyisocyanate 4 | 13.2 | 74.2 | 0.28 | 1562 | 7.0 | Clear |
| polyisocyanate 5 | 13.4 | 74.9 | 0.31 | 1330 | 9.2 | Clear |
| polyisocyanate 6 | 13.5 | 76.3 | 0.34 | 1784 | 11.7 | Clear |
| polyisocyanate 7 | 13.9 | 75.0 | 0.21 | 854 | 13.0 | Clear |
| Comparative polyisocyanate 1 | 13.6 | 74.4 | 0.30 | 889 | 14.2 | Turbid |
| Comparative polyisocyanate 2 | 15.5 | 74.3 | 0.36 | 2650 | 1.6 | Clear |

| | | | | | | |
|---|---|---|---|---|---|---|
| Note: The ratio of the integral area refers to the ratio of the integral area of the component peaks having a weight-average molecular weight of 800±50 g/mol to the integral area of the shoulder peaks having a weight-average molecular weight of 950±50 g/mol in the GPC measured with the gel chromatograph. | | | | | | |

It can be seen from Examples 1-7 that the polyisocyanate of the present invention not only has a high content of isocyanate groups, a low content of monomeric toluene diisocyanate and a low viscosity, but also has good storage stability. It can be seen from Comparative Example 1 that, when the ratio of the integral area of the component peaks having a weight-average molecular weight of 800±50 g/mol to the integral area of the shoulder peaks having a weight-average molecular weight of 950±50 g/mol in the gel chromatogram of the comparative polyisocyanate is higher than 14, the comparative polyisocyanate has poor storage stability. It can be seen from Comparative Example 2 that, when the ratio of the integral area of the component peaks having a weight-average molecular weight of 800±50 g/mol to the integral area of the shoulder peaks having a weight-average molecular weight of 950±50 g/mol in the GPC of the comparative polyisocyanate is less than 2 obtained by adding a Borchi^{®} Kat 22 solution, although the storage stability of the comparative polyisocyanate is improved, the viscosity of the comparative polyisocyanate is more than 2500 mPa·s, which is disadvantageous for practical industrial applications.

In comparison of Examples 2-6 with Examples 1 and 7, when the viscosity of the polyisocyanate is not higher than 2000 mPa·s, and the ratio of the integral area of the component peaks having a weight-average molecular weight of 800±50 g/mol to the integral area of the shoulder peaks having a weight-average molecular weight of 950±50 g/mol is 4-12, the polyisocyanate has good storage stability and is more in line with the desired low viscosity requirements in the industry. As shown in Examples 3-6, when the viscosity of the polyisocyanate is not higher than 1800 mPa·s, and the ratio of the integral area of the component peaks having a weight-average molecular weight of 800±50 g/mol to the integral area of the shoulder peaks having a weight-average molecular weight of 950±50 g/mol is 6-12, the polyisocyanate has good storage stability and is more popular in the industry.

## Claims

1. A urethane group-containing polyisocyanate prepared by reacting a system containing organic polyhydroxy compounds and excess toluene diisocyanate, the organic polyhydroxy compound contains trimethylolpropane and optional di- to tetra-hydric alcohols having a molecular weight of 62-146 g/mol, the polyisocyanate has the following characteristics:
a. the ratio of the integral area of the component peaks having a weight-average molecular weight of 800±50 g/mol to the integral area of the shoulder peaks having a weight-average molecular weight of 950±50 g/mol is 2-14; and
b. the viscosity is not higher than 2500mPa·s,
wherein the polyisocyanate component and the weight-average molecular weight thereof are determined according to DIN 55672-1:2016-03 with a HLC-8320 EcoSEC-type gel chromatograph from TOSOH, using polystyrene standard and high performance universal chromatographic column, a group of 4 columns (TSKgel G2000HXL, TSKgel G2500HXL, TSKgel G3000HXL and TSKgel G4000HXL, the chromatographic column packing material is a styrene-divinylbenzene copolymer) and a differential refraction detector, using THF as eluent, a flow rate of 1.0 ml/min, a pressure of 6.4 MPa and a column temperature of 40°C,
and wherein the viscosity of the polyisocyanate component is measured according to DIN EN ISO 5:1994-10 using a cone/plate measuring instrument at 23°C.

2. The polyisocyanate according to claim 1, which is **characterized in that** the ratio of the integral area of the component peaks having a weight-average molecular weight of 800±50 g/mol to the integral area of the shoulder peaks having a weight-average molecular weight of 950±50 g/mol is 3-13, preferably 4-12, most preferably 6-12.

3. The polyisocyanate according to claim 1 or 2, which is **characterized in that** the viscosity of the polyisocyanate is not higher than 2000 mPa·s, preferably not higher than 1800 mPa·s.

4. The polyisocyanate according to any of claims 1-3, which is **characterized in that** the polyisocyanate further has one or more of the following characteristics:
c. the solid content is not lower than 50wt% and not higher than 90wt%;
d. the amount of the unreacted excess toluene diisocyanate is not higher than 0.5wt%; and
e. the isocyanate group content is 13wt%-15wt%;
all of the above weight percent numbers are based on the total weight of the polyisocyanate being 100wt%.

5. The polyisocyanate according to any of claims 1-4, which is **characterized in that** the total weight of the trimethylolpropane and the optional di- to tetra-hydric alcohols having a molecular weight of 62-146 g/mol is 99.7wt%-100wt%, based on the total weight of the organic polyhydroxy compound being 100wt%.

6. The polyisocyanate according to any of claims 1-5, which is **characterized in that** the weight ratio of the trimethylolpropane to the di- to tetra-hydric alcohols having a molecular weight of 62-146 g/mol is 1:4-4:1, preferably 3:7-3: 1, most preferably 1:1-7:3.

7. The polyisocyanate according to any of claims 1-6, which is **characterized in that** the di- to tetra-hydric alcohols having a molecular weight of 62-146 g/mol is one or more of the following: ethylene glycol, diethylene glycol, 1,2-propylene glycol, 1,3-propylene glycol, 1,2-buylene glycol, 1,3-buylene glycol, 1,4-buylene glycol, 1,5-pentylene glycol, neopentylene glycol, 1,6-hexylene glycol, 2-ethyl hexylene glycol, glycerol and pentaerythritol, most preferably diethylene glycol.

8. The polyisocyanate according to any of claims 1-7, which is **characterized in that** the di- to tetra-hydric alcohols having a molecular weight of 62-146 g/mol is diethylene glycol, the weight ratio of trimethylolpropane to diethylene glycol is 1:4-4:1, preferably 3:7-3:1, most preferably 1:1-7:3.

9. The polyisocyanate according to any of claims 1-8, which is **characterized in that** the system further contains isocyanate compounds different from the toluene diisocyanate, the weight ratio of the toluene diisocyanate to the isocyanate compounds different from the toluene diisocyanate is not lower than 60:40, preferably not lower than 90:10, most preferably not lower than 95:5.

10. The polyisocyanate according to any of claims 1-9, which is **characterized in that** the toluene diisocyanate is a mixture of 2,4-toluene diisocyanate and 2,6-toluene diisocyanate in a weight ratio of 60:40-95:5, preferably 65:35-90: 10, most preferably 70:30-85:15.

11. A process for preparing the polyisocyanate according to any of claims 1-10, which comprises:
i. reacting a system containing organic polyhydroxy compounds and excess toluene diisocyanate to produce a pre-polymer reaction mixture, the reaction temperature is 85°C-120°C, the reaction time is 1 hour to 24 hours;
ii. removing the unreacted toluene diisocyanate by separation from the pre-polymer reaction mixture obtained in step i; and
iii. adding organic solvents to dilute and to produce the polyisocyanate.

12. The process according to claim 11, which is **characterized in that** in said step i, the reaction temperature is 85°C-110°C, preferably 90°C-98°C.

13. The process according to claim 11 or 12, which is **characterized in that** in said step i, the reaction time is 1.2 hours to 7 hours, preferably 1.2 hours to 4 hours.

14. The process according to any of claims 11-13, which is **characterized in that** the equivalent ratio of the isocyanate group to the hydroxy group of the system is 3:1-20:1, preferably 3.5:1-10:1, most preferably 3.8:1-8:1.

15. A product, which contains the polyisocyanate according to any of claims 1-10.

16. The product according to claim 15, which is **characterized in that** the product is selected from a group consisting of a polyurethane paint and a polyurethane adhesive.

17. Use of the polyisocyanate according to any of claims 1-10 as a polyisocyanate component in the polyurethane paint.

18. Use of the polyisocyanate according to any of claims 1-10 as a polyisocyanate component in the polyurethane adhesive.

## Patentansprüche

1. Urethangruppen enthaltendes Polyisocyanat, hergestellt durch Umsetzen eines Systems, das organische Polyhydroxyverbindungen und überschüssiges Toluoldiisocyanat enthält, wobei die organische Polyhydroxyverbindung Trimethylolpropan und fakultative zwei- bis vierwertige Alkohole mit einem Molekulargewicht von 62-146 g/mol enthält und das Polyisocyanat folgende Eigenschaften aufweist:
**a.** das Verhältnis der Integralfläche der Komponentenpeaks mit einem gewichtsmittleren Molekulargewicht von 800±50 g/mol zur Integralfläche der Schulterpeaks mit einem gewichtsmittleren Molekulargewicht von 950±50 g/mol beträgt 2-14; und
b. die Viskosität beträgt nicht mehr als 2500 mPa·s,
wobei die Polyisocyanatkomponente und deren gewichtsmittleres Molekulargewicht nach DIN 55672-1:2016-03 mit einem Gelchromatographen des Typs HLC-8320 EcoSEC von TOSOH unter Verwendung eines Polystyrolstandards und einer Hochleistungs-Universalchromatographiesäule, einer Gruppe von 4 Säulen (TSKgel G2000HXL, TSKgel G2500HXL, TSKgel G3000HXL und SKgel G4000HXL, bei dem Packungsmaterial für die Chromatographiesäule handelt es sich um ein Styrol-Divinylbenzol-Copolymer) und einem Diffrentialbrechungsdetektor unter Verwendung von THF als Elutionsmittel, einer Durchflussrate von 1,0 ml/min, einem Druck von 6,4 MPa und einer Säulentemperatur von 40 °C bestimmt werden
und wobei die Viskosität der Polyisocyanatkomponente nach DIN EN ISO 5:1994-10 unter Verwendung eines Kegel/Platte-Messgeräts bei 23 °C gemessen wird.

2. Polyisocyanat nach Anspruch 1, **dadurch gekennzeichnet, dass** das Verhältnis der Integralfläche der Komponentenpeaks mit einem gewichtsmittleren Molekulargewicht von 800±50 g/mol zur Integralfläche der Schulterpeaks mit einem gewichtsmittleren Molekulargewicht von 950±50 g/mol 3-13, vorzugsweise 4-12, ganz besonders bevorzugt 6-12, beträgt.

3. Polyisocyanat nach Anspruch 1 oder 2, **dadurch gekennzeichnet, dass** die Viskosität des Polyisocyanats nicht mehr als 2000 mPa·s, vorzugsweise nicht mehr als 1800 mPa·s, beträgt.

4. Polyisocyanat nach einem der Ansprüche 1-3, **dadurch gekennzeichnet, dass** das Polyisocyanat ferner eine oder mehrere der folgenden Eigenschaften aufweist:
c. der Feststoffgehalt beträgt nicht weniger als 50 Gew.-% und nicht mehr als 90 Gew.-%;
d. die Menge des nicht umgesetzten überschüssigen Toluoldiisocyanats beträgt nicht mehr als 0,5 Gew.-%; und
e. der Isocyanatgruppengehalt beträgt 13 Gew.-%-15 Gew.-%;
wobei sich alle obigen Gewichtsprozentzahlen auf das Gesamtgewicht des Polyisocyanats, das sich auf 100 Gew.-% beläuft, beziehen.

5. Polyisocyanat nach einem der Ansprüche 1-4, **dadurch gekennzeichnet, dass** das Gesamtgewicht des Trimethylolpropans und der fakultativen zwei- bis vierwertigen Alkoholen mit einem Molekulargewicht von 62-146 g/mol 99,7 Gew.-%-100 Gew.-%, bezogen auf das Gesamtgewicht der organischen Polyhydroxyverbindung, das sich auf 100 Gew.-% beläuft, beträgt.

6. Polyisocyanat nach einem der Ansprüche 1 bis 5, **dadurch gekennzeichnet, dass** das Gewichtsverhältnis von Trimethylolpropan zu zwei- bis vierwertigen Alkoholen mit einem Molekulargewicht von 62-146 g/mol 1:4-4:1, vorzugsweise 3:7-3:1, ganz besonders bevorzugt 1:1-7:3, beträgt.

7. Polyisocyanat nach einem der Ansprüche 1-6, das **dadurch gekennzeichnet** ist, es sich bei den zwei- bis vierwertigen Alkoholen mit einem Molekulargewicht von 62-146 g/mol um eines oder mehrere der Folgenden handelt: Ethylenglykol, Diethylenglykol, 1,2-Propylenglykol, 1,3-Propylenglykol, 1,2-Buylenglykol, 1,3-Buylenglykol, 1,4-Buylenglykol, 1,5-Pentylenglykol, Neopentylenglykol, 1,6-Hexylenglykol, 2-Ethylhexylenglykol, Glycerin und Pentaerythritol, ganz besonders bevorzugt Diethylenglykol.

8. Polyisocyanat nach einem der Ansprüche 1 bis 7, **dadurch gekennzeichnet, dass** es sich bei den zwei- bis vierwertigen Alkoholen mit einem Molekulargewicht von 62-146 g/mol um Diethylenglykol handelt, wobei das Gewichtsverhältnis von Trimethylolpropan zu Diethylenglykol 1:4-4:1, vorzugsweise 3:7-3:1, ganz besonders bevorzugt 1:1-7:3, beträgt.

9. Polyisocyanat nach einem der Ansprüche 1 bis 8, **dadurch gekennzeichnet, dass** das System ferner von dem Toluoldiisocyanat verschiedene Isocyanatverbindungen enthält, wobei das Gewichtsverhältnis von Toluoldiisocyanat zu von dem Toluoldiisocyanat verschiedenen Isocyanatverbindungen nicht weniger als 60:40, vorzugsweise nicht weniger als 90:10, ganz besonders bevorzugt nicht weniger als 95:5, beträgt.

10. Polyisocyanat nach einem der Ansprüche 1 bis 9, **dadurch gekennzeichnet, dass** das es sich bei dem Toluoldiisocyanat um ein Gemisch von 2,4-Toluoldiisocyanat und 2,6-Toluoldiisocyanat in einem Gewichtsverhältnis von 60:40-95:5, vorzugsweise 65:35-90:10, ganz besonders bevorzugt 70:30-85:15, handelt.

11. Verfahren zur Herstellung des Polyisocyanats nach einem der Ansprüche 1-10, das Folgendes umfasst:
i. Umsetzen eines Systems, das organische Polyhydroxyverbindungen und überschüssiges Toluoldiisocyanat enthält, zu einer Prepolymer-Reaktionsmischung, wobei die Reaktionstemperatur 85 °C-120 °C beträgt und die Reaktionszeit 1 Stunde bis 24 Stunden beträgt;
ii. Entfernen des nicht umgesetzten Toluoldiisocyanats durch Abtrennung aus der in Schritt i erhaltenen Prepolymere-Reaktionsmischung; und
iii. Zugeben von organischen Lösungsmitteln zum Verdünnen und Herstellen des Polyisocyanats.

12. Verfahren nach Anspruch 11, **dadurch gekennzeichnet, dass** in dem Schritt i die Reaktionstemperatur 85 °C-110 °C, vorzugsweise 90 C°-98 °C beträgt.

13. Verfahren nach Anspruch 11 oder 12, **dadurch gekennzeichnet, dass** in Schritt i die Reaktionszeit 1,2 Stunden bis 7 Stunden, vorzugsweise 1,2 Stunden bis 4 Stunden, beträgt.

14. Verfahren nach einem der Ansprüche 11-13, **dadurch gekennzeichnet, dass** das Äquivalentverhältnis von Isocyanatgruppe zu Hydroxygruppe des Systems 3:1-20:1, vorzugsweise 3,5:1-10:1, ganz besonders bevorzugt 3,8:1-8:1, beträgt.

15. Produkt, das das Polyisocyanat nach einem der Ansprüche 1-10 enthält.

16. Produkt nach Anspruch 15, **dadurch gekennzeichnet, dass** das Produkt aus einer Gruppe bestehend aus einem Polyurethanlack und einem Polyurethanklebstoff ausgewählt ist.

17. Verwendung des Polyisocyanats nach einem der Ansprüche 1-10 als Polyisocyanatkomponente in dem Polyurethanlack.

18. Verwendung des Polyisocyanats nach einem der Ansprüche 1-10 als Polyisocyanatkomponente in dem Polyurethanklebstoff.

## Revendications

1. Polyisocyanate contenant un groupement uréthane, préparé par la réaction d'un système contenant des composés polyhydroxylés organiques et un excès de diisocyanate de toluène, le composé polyhydroxylé organique contenant du triméthylolpropane et, éventuellement, des alcools di- à tétra-hydriques ayant un poids moléculaire de 62-146 g/mol, le polyisocyanate présentant les caractéristiques suivantes :
a. le rapport entre l'aire intégrale des pics de composants ayant un poids moléculaire moyen en poids de 800 ± 50 g/mol et l'aire intégrale des pics d'épaulement ayant un poids moléculaire moyen en poids de 950 ± 50 g/mol est de 2-14 ; et
b. la viscosité n'est pas supérieure à 2500 mPa·s,
où le composant polyisocyanate et le poids moléculaire moyen en poids de celui-ci sont déterminés selon la norme DIN 55672-1:2016-03 par chromatographie sur gel de type HLC-8320 EcoSEC de TOSOH, en utilisant un étalon de polystyrène et une colonne de chromatographie universelle haute performance, un groupe de 4 colonnes (TSKgel G2000HXL, TSKgel G2500HXL, TSKgel G3000HXL et TSKgel G4000HXL, le matériau de remplissage des colonnes de chromatographie étant un copolymère de styrène-divinylbenzène) et un détecteur à réfraction différentielle, en utilisant du THF comme éluant, un débit de 1,0 ml/min, une pression de 6,4 MPa et une température de colonne de 40°C,
et où la viscosité du composant polyisocyanate est mesurée selon la norme DIN EN ISO 5:1994-10 à l'aide d'un instrument de mesure à cône/plan à 23°C.

2. Polyisocyanate selon la revendication 1, **caractérisé en ce que** le rapport entre l'aire intégrale des pics de composants ayant un poids moléculaire moyen en poids de 800 ± 50 g/mol et l'aire intégrale des pics d'épaulement ayant un poids moléculaire moyen en poids de 950 ± 50 g/mol est de 3-13, préférablement de 4-12, tout préférablement de 6-12.

3. Polyisocyanate selon la revendication 1 ou 2, **caractérisé en ce que** la viscosité du polyisocyanate n'est pas supérieure à 2000 mPa·s, préférablement pas supérieure à 1800 mPa·s.

4. Polyisocyanate selon l'une quelconque des revendications 1-3, **caractérisé en ce que** le polyisocyanate présente en outre l'une ou plusieurs parmi les caractéristiques suivantes :
c. la teneur en matières sèches n'est pas inférieure à 50% en poids et n'est pas supérieure à 90% en poids ;
d. la quantité de diisocyanate de toluène en excès n'ayant pas réagi n'est pas supérieure à 0,5% en poids ; et
e. la teneur en groupements isocyanate est de 13% en poids-15% en poids ;
tous les nombres de pourcentages en poids ci-dessus étant basés sur le poids total du polyisocyanate donné à 100% en poids.

5. Polyisocyanate selon l'une quelconque des revendications 1-4, **caractérisé en ce que** le poids total du triméthylolpropane et des éventuels alcools di- à tétra-hydriques ayant un poids moléculaire de 62-146 g/mol est de 99,7% en poids-100% en poids, sur la base du poids total du composé polyhydroxylé organique donné à 100% en poids.

6. Polyisocyanate selon l'une quelconque des revendications 1-5, **caractérisé en ce que** le rapport pondéral du triméthylolpropane aux alcools di- à tétra-hydriques ayant un poids moléculaire de 62-146 g/mol est de 1:4-4:1, préférablement de 3:7-3:1, tout préférablement de 1:1-7:3.

7. Polyisocyanate selon l'une quelconque des revendications 1-6, **caractérisé en ce que** les alcools di-à tétra-hydriques ayant un poids moléculaire de 62-146 g/mol sont constitués d'un ou plusieurs parmi ce qui suit : l'éthylène glycol, le diéthylène glycol, le 1,2-propylène glycol, le 1,3-propylène glycol, le 1,2-butylène glycol, le 1,3-butylène glycol, le 1,4-butylène glycol, le 1,5-pentylène glycol, le néo-pentylène glycol, le 1,6-hexylène glycol, le 2-éthylhexylène glycol, le glycérol et le pentaérythritol, tout préférablement le diéthylène glycol.

8. Polyisocyanate selon l'une quelconque des revendications 1-7, **caractérisé en ce que** les alcools di-à tétra-hydriques ayant un poids moléculaire de 62-146 g/mol sont le diéthylène glycol, le rapport pondéral du triméthylolpropane au diéthylène glycol étant de 1:4-4:1, préférablement de 3:7-3:1, tout préférablement de 1:1-7:3.

9. Polyisocyanate selon l'une quelconque des revendications 1-8, **caractérisé en ce que** le système contient en outre des composés isocyanate différents du diisocyanate de toluène, le rapport pondéral du diisocyanate de toluène aux composés isocyanate différents du diisocyanate de toluène n'étant pas inférieur à 60:40, préférablement pas inférieur à 90:10, tout préférablement pas inférieur à 95:5.

10. Polyisocyanate selon l'une quelconque des revendications 1-9, **caractérisé en ce que** le diisocyanate de toluène est un mélange de 2,4-diisocyanate de toluène et de 2,6-diisocyanate de toluène selon un rapport pondéral de 60:40-95:5, préférablement de 65:35-90:10, tout préférablement de 70:30-85:15.

11. Procédé de préparation du polyisocyanate selon l'une quelconque des revendications 1-10, comprenant :
i. la réaction d'un système contenant des composés polyhydroxylés organiques et un excès de diisocyanate de toluène pour produire un mélange réactionnel de prépolymère, la température de réaction étant de 85°C-120°C, le temps de réaction allant de 1 heure à 24 heures ;
ii. l'élimination du diisocyanate de toluène n'ayant pas réagi par séparation du mélange réactionnel de prépolymère obtenu à l'étape i ; et
iii. l'addition de solvants organiques pour diluer et produire le polyisocyanate.

12. Procédé selon la revendication 11, **caractérisé en ce que**, dans ladite étape i, la température de réaction est de 85°C-110°C, préférablement de 90°C-98°C.

13. Procédé selon la revendication 11 ou 12, **caractérisé en ce que**, dans ladite étape i, le temps de réaction va de 1,2 heure à 7 heures, préférablement de 1,2 heure à 4 heures.

14. Procédé selon l'une quelconque des revendications 11-13, **caractérisé en ce que** le rapport équivalent du groupement isocyanate au groupement hydroxyle du système est de 3:1-20:1, préférablement de 3,5:1-10:1, tout préférablement de 3,8:1-8:1.

15. Produit contenant le polyisocyanate selon l'une quelconque des revendications 1-10.

16. Produit selon la revendication 15, **caractérisé en ce que** le produit est choisi dans le groupe constitué par une peinture polyuréthane et un adhésif polyuréthane.

17. Utilisation du polyisocyanate selon l'une quelconque des revendications 1-10, en tant que composant polyisocyanate dans la peinture polyuréthane.

18. Utilisation du polyisocyanate selon l'une quelconque des revendications 1-10, en tant que composant polyisocyanate dans l'adhésif polyuréthane.
